(19)

Europäisches
Patentamt
European
Patent Office
Office européen
des brevets

(11) **EP 3 623 999 B1**

(12) **EUROPEAN PATENT SPECIFICATION**

(45) Date of publication and mention
of the grant of the patent:
**09.08.2023 Bulletin 2023/32**

(21) Application number: **19196365.1**

(22) Date of filing: **10.09.2019**

(51) International Patent Classification (IPC):
***G06F 18/213*** *(2023.01)*

(52) Cooperative Patent Classification (CPC):
**G06F 18/213;** G06F 2218/02; G06F 2218/16

(54) **SYSTEM AND METHOD FOR DETECTING AND ANALYZING OF THE GAIT OF A SUBJECT**

SYSTEM UND VORRICHTUNG ZUR DETEKTION UND ANALYSE DES GANGS EINER PERSON

SYSTÈME ET PROCÉDÉ DE DÉTECTION ET D' ANALYSE DE LA DÉMARCHE D'UN SUJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2018 IT 201800008514**

(43) Date of publication of application:
**18.03.2020 Bulletin 2020/12**

(73) Proprietor: **Ab.Acus S.r.l.**
**20155 Milan MI (IT)**

(72) Inventors:
 • **BULGHERONI, Maria**
 **20155 Milano (IT)**
 • **GOMEZ ORTEGA, Alejandra**
 **20155 Milano (IT)**
 • **BACCINELLI, Walter**
 **20155 Milano (IT)**
 • **D'AMICO, Enrico**
 **20155 Milano (IT)**

(74) Representative: **Gregorj S.r.l.**
**Via L. Muratori, 13/b**
**20135 Milano (IT)**

(56) References cited:
 • **JERZY KOLAKOWSKI ED - PIOTR BILSKI ET AL:
 "A System for Elderly Persons Behaviour
 Wireless Monitoring", 29 March 2017
 (2017-03-29), COMPUTER SYSTEMS FOR
 HEALTHCARE AND MEDICINE, ALSBJERGVEJ
 10 9260 GISTRUP, DK, PAGE(S) 31 - 50,
 XP009513475, ISBN: 978-87-93519-31-2 * page 34
 - page 47; figures 2.2-2.5 ***
 • **JAN-HINRICH HAUER: "Leveraging Human
 Mobility for Communication in Body Area
 Networks", ACM TRANSACTIONS ON SENSOR
 NETWORKS, ACM, 2 PENN PLAZA, SUITE 701
 NEW YORK NY 10121-0701 USA, vol. 10, no. 3, 6
 May 2014 (2014-05-06), pages 1-38, XP058048796,
 ISSN: 1550-4859, DOI: 10.1145/2491110**
 • **ANTONIO RAMON JIMENEZ RUIZ ET AL:
 "Accurate Pedestrian Indoor Navigation by
 Tightly Coupling Foot-Mounted IMU and RFID
 Measurements", IEEE TRANSACTIONS ON
 INSTRUMENTATION AND MEASUREMENT, IEEE
 SERVICE CENTER, PISCATAWAY, NJ, US, vol.
 61, no. 1, 1 January 2012 (2012-01-01), pages
 178-189, XP011387839, ISSN: 0018-9456, DOI:
 10.1109/TIM.2011.2159317**

## Description

### Technical field of the invention

The present invention concerns a system and a method for the detection and the analysis of walking, i.e. of a sequence of gait cycles performed by a subject, such as a person or an animal or a robot, along any path. A possible application of the system according to the invention is the detection of the movements of a subject for diagnostic and therapeutic purposes.

### State of the art

There are multiple situations in which it is necessary to detect the walking of a subject to perform a motor assessment. Particular relevance has the detection of walking for diagnostic or therapeutic aims. Anthropometric, neuro-muscular and biomechanical parameters are detected and, by a computational analysis, the kinematics and dynamics of the joints' movement are determined. The kinematic analysis of a subject allows to empower and facilitate the activity of the medical doctor in making a diagnosis. Also, the analysis facilitates the choice of a suitable rehabilitation therapy and allows the control of the obtained results and/or the recovery, even partial, of the lost capacities of the subject as well as the detection of possible congenital dysfunctions.

During walking a limb serves as support while the other moves up to the next stance, with an exchange of roles between the limbs. A gait cycle is a single sequence of a limb that comprises a condition or phase of flight called also swing phase, followed by a condition or phase of stance that starts with the contact on the ground of the foot and that ends when the toes lift off.

The parameters of the gait cycle are: the time spent in each condition "T" and the covered distance "D".

Some well-known solutions detect the parameters of the gait cycle by using so-called gait laboratories. In this case sensorized footboards or platforms associated to video-cameras systems are used.

Such laboratories are particularly costly, find room in specialised centres, require qualified personnel and allow the analysis only of few consecutive steps of a subject.

There are also difficulties of use when the subject helps himself with sticks, walkers or other devices while walking.

Other solutions use systems equipped with wearable inertial measurement units (IMUs). The signals generated by the used sensors are collected during walking and analysed to extract the parameters.

A prior art document disclosing a system using an IMU is the article having title "Accurate Pedestrian Indoor Navigation by Tightly Coupling Foot-mounted IMU and RFID measurements". The article describes a method for indoor pedestrian localization and navigation using an IMU, tags and an RFID reader that provides for a drift-free solution and a precise trajectory estimation for short distances.

Article having title "A system for Elderly Persons Behaviour Wireless Monitoring" discloses a measurement system for gathering data used for the evaluation of elderly persons' mobility and behavior. The system analyzes acceleration data of the elderly person to be monitored not only to evaluate his/her mobility but also to determine the room occupancy of the elderly person.

The use of IMUs requires the application of biomechanical models based on anthropometric parameters such as the lengths of the lower limb and the foot to determine the spatio-temporal parameters of the gait, that are time and length.

Such systems, although advantageous from various aspects, suffer from some inconveniences.

Some standardised algorithms use reference models that derive from models of regular walking. In such a case, for subjects with altered walking and asymmetric steps, due to muscular or neurological problems and trauma, the use of standardised algorithms may result in distorted or altered parameters. So, the computed spatio-temporal features may be inadequate and not usable.

So it is required to devise a system and a method that allow to perform a precise and accurate detection and analysis of walking, to determine the gait parameters of healthy subjects as well as of subjects with pathologies, independently of the pathologies of the subjects, in order to overcome the mentioned inconveniences.

It is also required to devise a system easy and simple to be used, portable and robust, with a reduced encumbrance and affordable, and that may be used without the presence of qualified personnel.

### Summary of the invention

The inventive idea that is at the foundation of the present invention is to detect separately parts of walking and analyse them independently for combining later on data detected for parts and defining multiple gait cycles, without altering the features of the walking itself.

On the basis of this inventive idea, the technical problem is solved by a system for detection and analysis of the walking as a sequence of gait cycles of a subject, such as a person or an animal or a robot, on a predefined pathway with any shape and/or slope according to claim 1.

The technical problem is further solved by a method of detection and analysis of the walking of a subject according to claim 9.

The dependent claims define possible advantageous embodiments.

### Short description of the drawings

To better understand the characteristics of the detection system according to the present invention and appreciate its advantages, in the following some of its embodiments will be described, referring to the attached figures, in which:

> Figure 1 is a schematic illustration of a system according to the present invention;
> Figure 2 is a schematic illustration of a detail of the system according to the present invention;
> Figure 3 is a schematic illustration of a gait cycle;

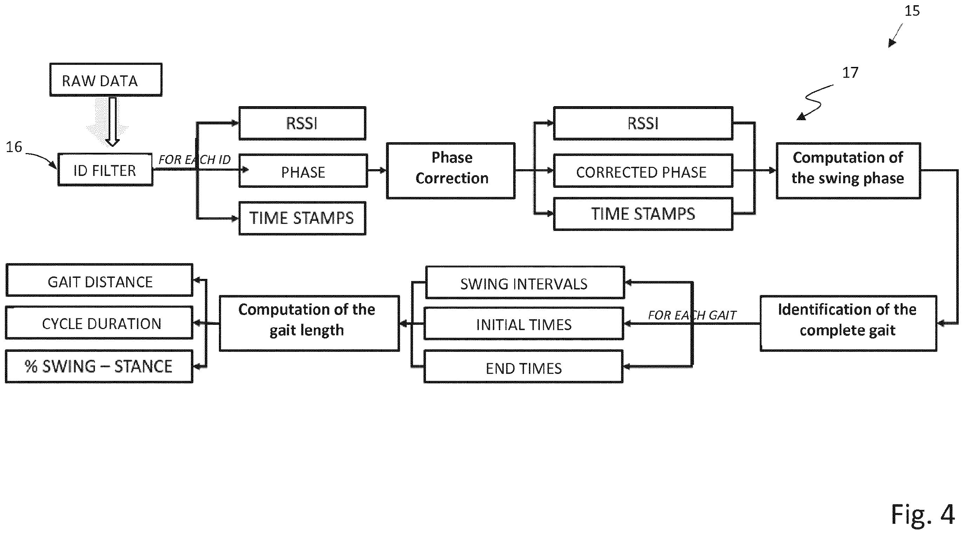

> Figure 4 is a block diagram of a monitoring method according to the present invention;

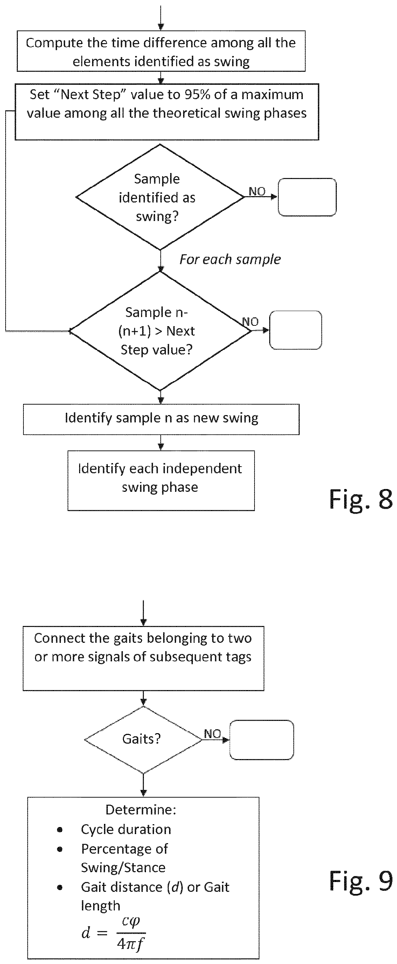

> Figures 5 to 9 are block diagrams of respective phases of the method in figure 4 according to a possible embodiment;
> Figures 10 and 11 are diagrams representing the time trend respectively of a quantity correlated to the power and a quantity correlated to the phase of the response signals emitted by the tags of the system and received by a communication device;
> Figures 12 and 13 are time diagrams of the quantities in diagrams 10 an 11 in which the response signals received by the communication device are identified tag by tag;

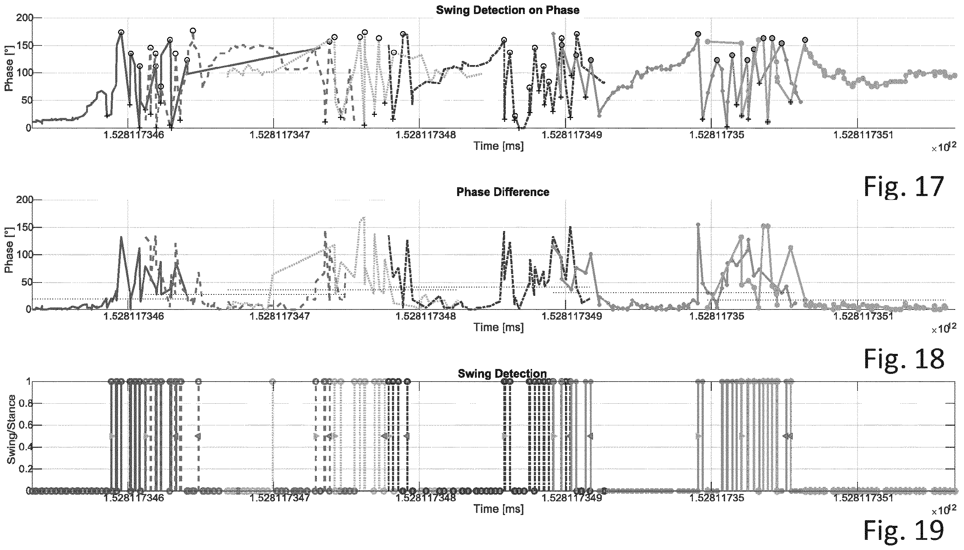

> Figures 14 to 20 represent the time diagram of quantities correlated to the power and the phase of response signals received by the communication device, processed according the to present invention and described in several parts of the method.

**Detailed description of the invention**

Referring to such figures, 1 globally indicates a system for the detection and the analysis of the walking of a subject 2 comprising multiple gait cycles on a path 5. The subject 2 can be a healthy person or a person affected by pathologies of the neuro-muscular-skeletal system or provided with artificial limbs or prostheses or using one or more supports for walking such as canes, walkers or exoskeletons or it can also be an animal.

A series of tags $6_r$ r=1,...p is associated to the path 5, where the tags $6_r$ r=1,...p are associated in succession. The tags $6_r$ r=1,...p are tags automatically remotely identifiable through a communication device 10. Each tag $6_r$ r=1,...p comprises a memory elements for storing the identification data ID of said tag 6, r=1,...p and a receiver/transmitter suitable for receiving a reading signal and providing a response signal in response to said reading signal.

In the memory element of the tags $6_r$ r=1,...p different typologies of identification data may be stored in addition to the unique identification code ID, for example their position with respect to a reference.

The tags $6_r$ r=1,...p are preferably RFID (Radio Frequency IDentification) tags, referring to a known technology for remote identification. Such tags $6_r$ r=1,...p are able to communicate the information that they contain when they are queried by a RFID reader through the emission of an electromagnetic response signal.

The response signal sent by a single tag $6_r$ r=1,...p and received by the RFID reader enables the detection, beside the identification data ID, of characteristic parameters such as: a quantity representative of power or power value RSSI and a quantity representative of phase or phase value Ph.

The tags $6_r$ r=1,...p may alternatively be: passive, active or hybrid tags. Passive tags are not equipped with batteries and receive the energy needed for the emission of the response signal from the RF electromagnetic reading signal sent by the reader. Active tags are equipped with an embedded battery, while hybrid tags have a hybrid architecture.

According to an embodiment, passive tags $6_r$ r=1,..p are used, which have the advantage of being low-cost and presenting suitable characteristics for the functionalities required by the system 1.

The communication device 10 is a radiofrequency device comprising a RFID reader. Indeed, the communication device 10 can detect, for each response signal ni i=1,..k, the identification code or identification data ID of the tag $6_r$ r=1,..p, and the above mentioned characteristic parameters namely the power value RSSI and the phase value Ph. The communication device is also able to associate a reception time $T_i$ i=1,..k of each response signal ni i=1,..k, as additional characteristic parameter.

In an embodiment, the communication device 10 is integrally attached to a lower limb 3 of the subject 2 (or to multiple limbs) through a strap or an elastic band or equivalent tools.

The communication device 10 is associated to at least one antenna 11 and it is suitable for sending a sequence of reading signals and for detecting the response signals $n_i$ i=1,..k, sent by each tag $6_r$ r=1,..p of said sequence.

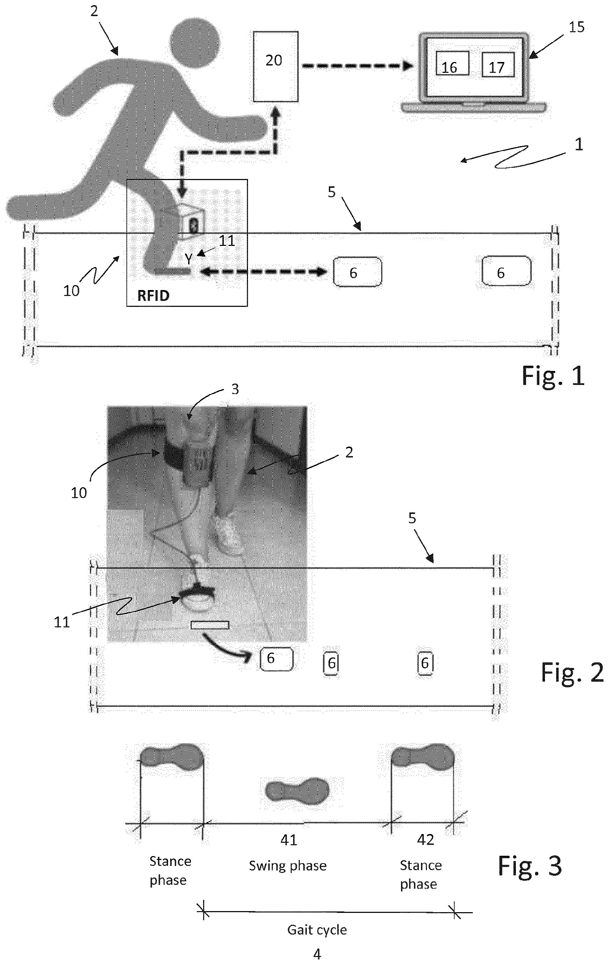

As shown in Figure 1 and 2, the antenna 11 must be associated to the limb 3 of the subject 2 in order to be integral with the position of the limb 3 during the time for covering the path 5.

In this way, the power value RSSI of each response signal received by the communication device 10 is directly correlated with the distance between the communication device 10, in particular the antenna 11, and the single tag $6_r$ r=1,..p.

Specifically referring to RFID tags, such power value RSSI of the response signal increases when such distance decreases and decreases when such distance increases.

The phase value Ph of each response signal received by the communication device 10 is directly correlated to the position of the lower limb 3 relatively to the tag $6_r$ r=1,..p. In particular, as shown in Figure 3, a gait cycle 4 comprises a swing phase 41 followed by a stance phase 42. During the stance phase 42 the foot or the paw of the subject 2 stays relatively still with respect to the path 5 or to the ground and, thus, the response signal is characterised by low variability. In this case, the phase value Ph remains basically constant. On the other side, during the swing phase 41, the limb 3 or the paw of the subject 2 stays off the ground. Such movement of the limb 3 is represented between successive response signals ni i=1,..k by a variation of the phase value Ph, that can be comprised into the [0°-180°] range.

The maximum distance between the tag $6_r$ r=1,..p and the communication device 10 allowing the detection of the power value RSSI depends on the characteristics of the tags $6_r$ r=1,..p and of the communication device 10.

In an experimental trial, six RFID passive tags $6_r$ r=1,..p working in ultra-high frequency (UHF), substantially equal to 864MHz, have been used and a sequence of reading signals has been sent through a communication device 10 of type ultra-high frequency RFID receiver/emitter. The communication device 10 detects the succession of response signals ni i=1,..k sent by the tags $6_r$ r=1,..p and, for each response signal ni i=1,..k detects the following data: the identification code ID, the power value RSSI, the phase value Ph and the reception time $T_i$ i=1,..k.

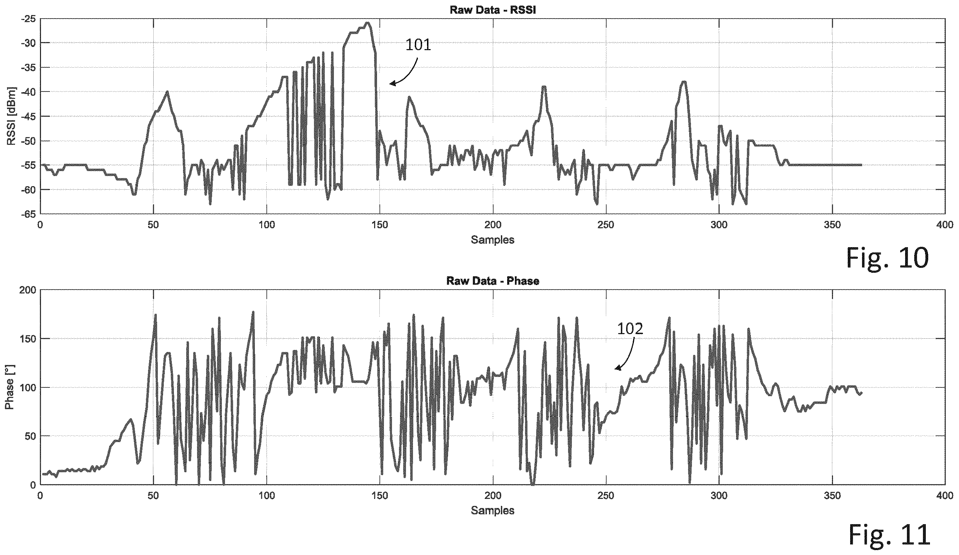

The communication device 10 is able to store, in an associated memory unit, such data as function of the reception time $T_i$ i=1,..k. In figures 10 and 11 a trend power signal 101 and a trend phase signal 102 are shown, respectively reporting the time trend of the power value RSSI of the succession of said response signals ni i=1,..k and the time trend of the phase value Ph of said response signals ni i=1,..k respectively.

From the time trends reported in figures 10 and 11, it is possible to see that a phase signal 102 with low variability may be correlated to a stance phase 42. Moreover, it is possible to see that time trends of the trend phase signal 102 with high variability may be correlated to a swing phase according to the previous explanation.

The system 1, according to the present invention, comprises a data processing module 15 that is operatively connected to the communication device 10 and is configured to analyse the response signals ni i=1,..k received from the communication device 10. The data processing module 15 is able to process the phase representative quantities or phase values Ph with respect to the power representative quantities or power values RSSI of the response signals ni i=1,..k received in succession. The data processing module 15 is configured to identify among said response signals ni i=1,..k, two or more actual swing signals and to determine characteristic quantities of said gait cycles 4 relative to the walking of subject 2 along said path 5, according to said characteristic parameters of two or more actual swing signals.

Advantageously, the processing is carried out for each tag $6_r$ r=1,..p independently, enabling the analysis of homogeneous response signals ni i=1,..k resulting in an higher accuracy of the analysis. The characteristic parameters, obtained through the processing, enable the selection of response signals ni i=1,..k defining said actual swing signals. In this way, the characteristic quantities of said gait cycles are obtained through the analysis of said actual swing signals as function of the reception time $T_i$ i=1,..k of the correspondent response signals ni i=1,..k and substantially freely from said emitting tags $6_r$ r=1,..p.

In an embodiment, the data processing module 15 comprises a filtering unit 16 that is able to divide the received response signals ni i=1,..k based on said identification data ID, generating respective tag groupings $Tg_r$ r=1,..,p.

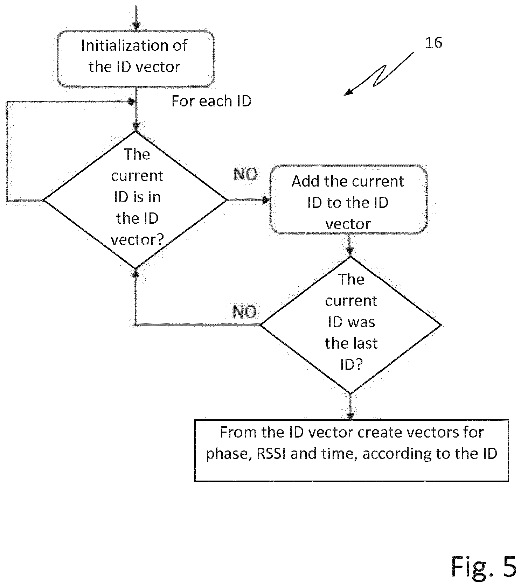

An operative embodiment of the filtering unit 16 is schematically shown in Figure 5.

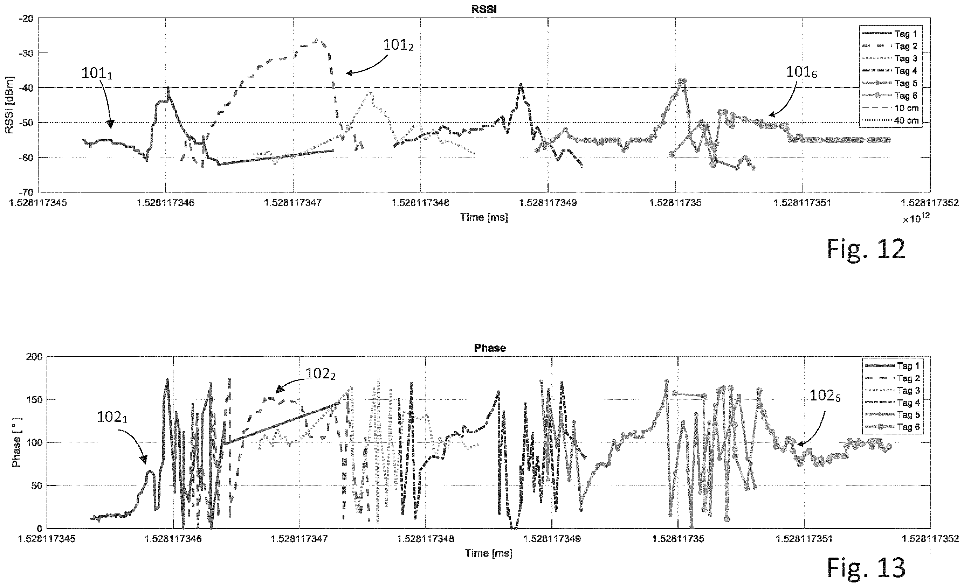

The trend power signal 101 and the trend phase signal 102 are divided according to tag groupings $Tg_r$ r=1,..,p and generate respective divided power signals $101_{1,..p}$ and divided phase signals $102_{1,..p}$. In figures 12 and 13 the divided power signals $101_{1,..p}$ and the divided phase signals $102_{1,..p}$ related to the experimental trial and grouped for each of the six tags $6_1, ..,6_6$ are shown respectively. Such divided power signals $101_1-101_6$ and divided phase signals $102_1-102_6$ may present partial time overlapping, that may generally be found when the subject 2 walks between one tag $6_r$ r=1,..p and the successive one and the reading signal of two or more successive tags $6_r$ r=1,..p is received.

Moreover, the data processing module 15 comprises a processing unit 17 operatively connected to said filtering unit 16. The processing unit 17 is configured to identify one or more anomalous signals having a phase representative quantity or phase value Ph that is discontinuous with respect to the phase value Ph of said response signals ni i=1,..k received in succession.

In an embodiment, the processing unit 17 is configured for analysing the phase signal 102 relatively to the divided power signal 101 of said response signals ni i=1,..k received in succession for detecting anomalous signals. The processing unit 17 is able to perform a correction of the phase value of said anomalous signals. Preferably the processing unit 17 performs the detection and the correction of said anomalous signals considering the response signals ni i=1,..k for each tag grouping $Tg_r$ r=1,..,p.

In an embodiment, the processing unit 17 is configured for performing a first phase comparison determining a phase difference value between a response signal n and a successive response signal n+1 and for comparing such phase difference value with a predefined threshold value V1. The successive response signal n+1 is the response signal of the tag grouping $Tg_r$ r=1,..,p detected in time succession by the communication device 10. Based on such first comparison, if the phase difference value is higher that said first value V1, the processing unit 17 is configured to perform a second power comparison providing for determining a power difference value between the same two successive response signals n and n+1 and the comparison of such power difference value with a second predefined threshold value V2.

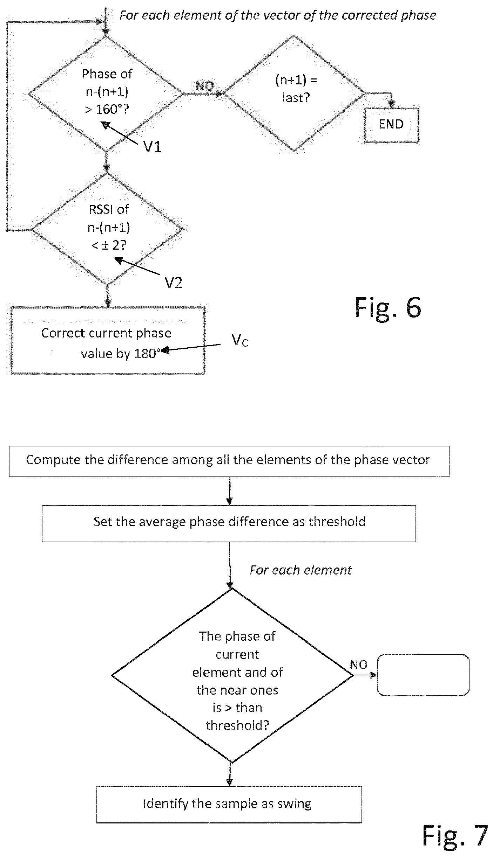

Based on said second comparison, if the power difference value is lower than the second value V2, the response signal n is considered anomalous and a phase correction is performed. The phase correction provides for adding a constant phase value Vc to the phase value or phase representative value of the response signal ni i=1,..k. In an embodiment, shown in figure 6, the first value V1 is substantially equal to 160° and the second value V2 is substantially equal to ±2dBm and the constant phase value Vc is substantially equal to ±180°.

In case the phase difference value is lower or equal to the first predefined threshold value V1, the response signal n is considered as correct and the filtering unit 16 performs the first and the second comparison considering, in a sequence, all the successive response signals ni i=1,..k of the tag groupings $Tg_r$ r=1,..,p.

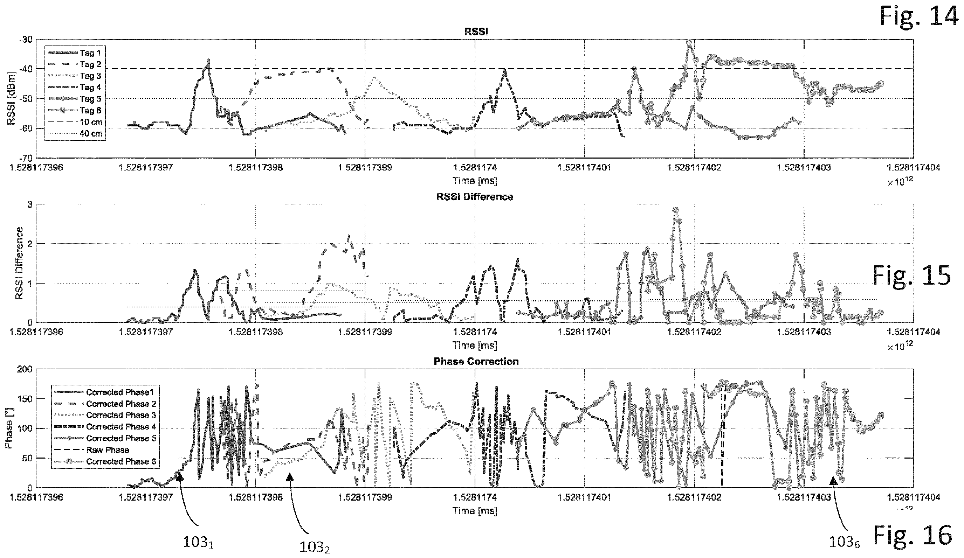

Figures 14, 15 and 16 show the results of an experimental trial of the detection and phase correction of said anomalous signals.

After the phase correction, the response signals ni i=1,..k received by the communication device 10 are associated to a corrected time phase trend 1031-n, where the discontinuity phase values of the anomalous signals are corrected. In particular, such phase correction enables the correction of possible communication errors of the system 1 related to the sending or the reception of the reading signals and/or the response signals ni i=1,..k.

Moreover, the processing unit 17 is configured to identify a series of swing signals $m_h$ h=1...,q for each tag groupings $Tg_r$ r=1,..,p. Such identification is performed by analysing the corrected trend phase signal 1031-n and by performing a third phase comparison between two successive response signals, nn and nn+1, with respect to a third predefined threshold value V3.

In an embodiment, the processing unit 17 is configured to determine said third threshold value V3 considering a grouping average value VMr r=1,..,p, that is computed as the average value among the phase difference values of said response signals ni i=1,..k comprised in the same tag grouping $Tg_r$ r=1,..,p.

The processing unit 17 thus identifies each response signal as a swing signal $m_h$ h=1...,q by comparing recursively the phase value Ph, corrected where appropriate, of each response signal ni i=1,..k with the respective grouping average value VMr r=1,..,p.

In such a way, each tag groupings $Tg_r$ r=1,..,p shows series of swing signals $m_h$ h=1...,q spaced by series of response signals ni i=1,..k that have not been identified as swing signals m.

Each series of swing signals $m_h$ h=1...,q comprises a first swing signal m1 and a last swing signal m2, relatively to the reception time $T_i$ i=1,..k of the respective response signals ni i=1,..k.

Therefore, the processing unit 17 is configured to determine at least one actual gait cycle 4 by processing the swing signals m of each series of swing signals $m_h$ h=1...,q identified, independently from said tag groupings $Tg_r$ r=1,..,p.

In an embodiment, the processing unit 17 can identify a theoretical swing T41 as the reception time period Ti i=1,..k of said response signals ni i=1,..k related to the first swing signal m1 and the last swing signal m2 of each series of swing signals $m_h$ h=1...,q.

In this way, it is possible to compute at least one theoretical gait cycle for each tag grouping $Tg_r$ r=1,..,p by taking into account successive initial swing signals $m_{in}$. Moreover, it is possible to identify a reception difference value ΔT based on the reception time $T_i$ i=1,..k of said first swing signals m1.

Furthermore, the processing unit 17 is configured to arrange in time order, as function of the reception time $T_i$ i=1,..k, all the theoretical swing signals, the initial theoretical swing signal $m_{in}$ and the final theoretical swing signal $m_{fin}$ in an ordered sequence, independently from the tag grouping $Tg_r$ r=1,..,p.

The processing unit 17 is configured to identify as "Next step" value a time-based threshold with a value relative to said theoretical swing T41 that have been previously computed between successive theoretical initial swing signals $m_{in}$ considered for each tag groupings $Tg_r$ r=1,..,p.

In an embodiment, the "Next step" value is defined as a percentage fraction of a maximum value Vmax among all the theoretical swing T41 identified independently from the tag grouping $Tg_r$ r=1,..,p. Such percentage fraction is substantially comprised between 90 and 97% and it is preferably equal to 95%.

The processing unit 17 can thus identify actual swing signals, $M_{in}$ and $M_{fin}$, in said signals ordered series.

The actual swing signals $M_{in}$ are the theoretical initial swing signals $m_{in}$ having an actual time interval to the successive theoretical initial swing signal $m_{in}$ higher than the said "Next step" value.

In this way, the initial actual swing signals $M_{in}$ successive to each other enable the identification of an actual gait cycle 4.

Beside this, the processing unit 17 is able to define characteristic parameters for each gait cycle 4 such as:

- an initial time $T_{in}$: the reception time $T_i$ i=1,..k of the initial actual swing signal $M_{in}$;
- an end time $T_{fin}$: the reception time $T_i$ i=1,..k of the final theoretical swing signal $m_{fin}$ comprised between successive initial actual swing signals $M_{in}$. Such final theoretical swing signal $m_{fin}$ defines an actual final swing signal $M_{fin}$;
- a percentage, relative to the swing interval or swing phase 41 and to the stance-phase interval or stance phase 42, computed relatively to the initial time $T_{in}$ and to the end time $T_{fin}$;
- The time duration of a complete gait cycle T computed as the difference between two successive initial times $T_{in}$.

Moreover, the processing unit 17 is configured for determining the actual gait distance D travelled by the subject 2 in each gait cycle 4. The value of such gait distance D is computed on the basis of the identified characteristic parameters and using the following equations:

$$d_i = \frac{c\varphi}{4\pi f}$$

$$D = \sum_n^1 d_i$$

Where:

di is distance difference from the same tag measured by two successive received signals;
c is the constant associated to the speed of light;
$\varphi$ is the phase difference between a received signal and the successive one;
f is the transmission frequency of the radiofrequency emitter;
D is the actual gait distance travelled by the subject 2.

It must be noted that, according to a possible embodiment, the predefined threshold values can be chosen so as to compensate the possible low quality of the recorded response signals ni i=1,..k.

In an embodiment, the system can comprise a visualization device 20 placed between said communication device 10 and said processing module 15. The visualization device 20 enables the visualization of the response signals ni i=1,..k received by the communication device 10 and/or the parameters associated to said gait cycles identified by the data processing module 15.

In a further embodiment, two or more antennas 11 can be associated to the limbs of the subject 2, being the communication device 10 able to send a series of reading signals differently for each limb 3 and therefore for each antenna 11 and able to identify distinctive walk parameters independently for each limb.

In the present description, the system as well as the components defined as "module" or "unit" may be implemented through hardware devices, through software or through their combination. In an embodiment, the system and particularly the data processing module and the memory module can be integrated in a computer such as a personal computer, even for home use, possibly remotely connected to the environment where the walking is performed relatively to the path 5. The memory module can be the computer's own memory or an external memory device. The processing module can comprise one or more processing units, such as electronic boards or processors or RAM memories, that may be integrated into the computer and/or the reading tool. The reading tool, in turn, can be connected and powered by the computer itself, for example through USB ports or another serial connection via wired connection systems or wirelessly.

According to a further aspect, the present invention relates also to a method for the identification and analysis of the walking of a subject 2 along a path 5, where the walking comprises a plurality of gait cycles 4.

The method provides associating a series of tags $6_r$ r=1,..p to the path 5, where each tag $6_r$ r=1,..p of the series is automatically remotely identifiable and is suitable for receiving a reading signal and for providing as a response to the reading signal a response signal n. From each received response signal ni i=1,..k, parameters identifying signals are detectable such as: identification data ID of the tag $6_r$ r=1,..p, a power representative quantity or power value RSSI and a phase representative quantity or phase value Ph of the response signal ni i=1,..k itself.

Moreover, the method provides for associating to a lower limb 3 of the subject 2 a radiofrequency R/F communication device 10, connected in turn to at least one antenna 11 and suitable for sending a series of reading signals and for detecting a sequence of response signals ni i=1,..k sent by said series of tags $6_r$ r=1,..p as a response to said sequence of reading signals. The method involves associating the communication device 10 and particularly the antenna 11 to the limb 3 of the subject 2 so that it remains integral with the limb 3 of the subject 2 during the path 5 covering time period, as shown in Figures 1 and 2.

The method provides also detecting a further identifying parameter that is a reception time $T_i$ i=1,..k, of each response signal ni i=1,..k.

The method provides for analysing the received response signals ni i=1,..k as a function of their respective reception time $T_i$ i=1,..k and processing the phase representative quantity or phase values Ph on the basis of said power representative quantities or power values RSSI to identify, among said response signals ni i=1,..k, two or more actual swing signals to determine characteristic parameters of the plurality of gait cycles 4 based on said actual swing signals.

In an example, the method provides for generating of a trend power signal 101 and a trend phase signal 102 that show the time trend of the power value RSSI of the succession of said response signals ni i=1,..k and the time trend of the phase value Ph of said response signals ni i=1,..k respectively.

The method provides for dividing the received response signals ni i=1,..k on the basis of the identification data ID generating, for each tag $6_r$ r=1,..p, a tag grouping $Tg_r$ r=1,..,p where p corresponds to the number of tags $6_r$ r=1,..p.

The method provides for generating for each tag grouping $Tg_r$ r=1,..,p a respective divided power signal 1011-101p and a respective divided phase signal $102_1$-$102_p$.

The method then provides for separately analysing each tag grouping $Tg_r$ r=1,..,p so as to detect one or more anomalous signals having a discontinuous phase value, that is discontinuous considering the trend of the correspondent grouped phase signal $102_1$-102p. The method provides for, then, correcting the phase value of said one or more identified anomalous signals.

The method provides for detecting one or more anomalous signals on the basis of a first phase comparison, considering the phase values Ph of said response signals ni i=1,..k received in succession, and on the basis of a second power comparison, considering the correspondent power values RSSI of said response signals ni i=1,..k.

In an embodiment, the method provides for performing the first phase comparison by determining a phase difference value between a response signal n and a successive response signal n+1 of each tag grouping $Tg_r$ r=1,..,p. It is provided for performing the second power comparison based on overcoming or not overcoming the phase difference with respect to a first predefined threshold value V1. Then it is provided to perform the second power comparison by identifying a power difference value between the response signal n and the successive response signal n+1 and to perform the phase correction based on overcoming or not overcoming the power difference value determined with respect to a second predefined threshold value V2.

In an embodiment, the phase correction requires to add a predefined value Vc to the phase vale Ph of the identified anomalous signal.

The method then provides for identifying in each tag grouping Tgr r =1,..,p at least one series of swing signals $m_h$ h=1...,q by comparing recursively said phase value Ph of each response signal ni i=1,...k to a predefined grouping average value VMr r=1,...,p.

In an embodiment, the grouping average value VMr r=1,..,p is defined for each tag grouping $Tg_r$ r=1,..,p and is computed as the average value among the phase difference values considering in succession the response signals ni i=1,..k comprised in the tag groupings $Tg_r$ r=1,..,p.

The method then provides for identifying for each identified series of swing signals $m_h$ h=1...,q a first swing signal m1 and a last swing signal m2, which are determined with respect to their own reception time $T_i$ i=1,..k.

The method provides for generating an ordered series of signals, such ordered series comprising said theoretical initial swing signal $m_{in}$ and said theoretical final swing signal $m_{fin}$ as a function of the reception time $T_i$ i=1,..k, considered independently from said tag groupings $Tg_r$ r=1,..,p.

Analysing the ordered series of signals, the method provides for identifying as actual initial swing signal $M_{in}$ each theoretical initial swing-phase signal $m_{in}$ showing, with respect to the successive theoretical initial swing signal $m_{in}$, an actual reception interval higher than a predefined time threshold or "Next step". The actual reception time interval is computed in relation to the reception time $T_i$ i=1,..k.

The method involves then identifying as actual final swing signal $M_{fin}$ each theoretical final swing signal $m_{fin}$ placed between two successive actual initial swing-phase signals Min.

In an example, it is provided the predefinition of the "Next step" threshold value based on a maximum value $V_{max}$ computed between successive theoretical initial swing signals min for each tag grouping $Tg_r$ r=1,..,p.

For each actual gait cycle 4, the characteristic parameters are defined such as: an initial time $T_{in}$, a final time $T_{fin}$, an actual swing phase, a relative percentage of the swing phase and the stance phase in each gait cycle 4, a gait distance D. The gait distance D is defined as the distance travelled during each actual gait cycle 4 computed on the basis of the reception time $T_i$ i=1,..k of said actual initial swing signals $M_{in}$ and said actual final swing signals $M_{fin}$.

The actual gait distance D, travelled by the subject 2 in each gait cycle 4 is computed based on the identified characteristic parameters and using the following equations:

$$d_i = \frac{c\varphi}{4\,\pi\,f}$$

$$D = \sum_n^1 d_i$$

where:

di is distance difference from the same tag as measured by two successive received signals;
c is the constant associated to the speed of light;
φ is the phase difference between a received signal and the successive one;
f is the transmission frequency of the radiofrequency emitter;
D is the actual gait distance travelled by the subject 2.

From the description provided above, the skilled person can notice how the system and the method according to the invention enable the detection and the analysis of the walking of a subject through the use of low-cost equipment (such as the RFID tags) and/or daily use equipment such as a laptop or a personal computer that may be for home use. Moreover, it can be noticed the flexibility of the system and the method that may be used indoor, such as in laboratories more or less equipped, but also outdoor even with sloping paths.

It is also noticeable, by a technician in this field, how the system and the method is flexible, being configured to determine gait cycles of the walking independently from the use of supports by the user such as canes, walkers or similar systems.

The skilled person may substitute to the described embodiments of the system and the method, some elements with some others functionally equivalent without exceeding the scope of the enclosed claims.

**Claims**

1. System (1) for the detection and the analysis of the walking of a subject (2) along a path (5), said path (5) being defined by a series of tags ($6_r$ r=1,...p) associated in a sequence and automatically remotely identifiable, each tag ($6_r$ r=1,...p) comprising:

   - a memory element storing identification data (ID) of said tag ($6_r$ r=1,...p) and
   - a receiver/transmitter configured to receive a reading signal and to provide, as response to said reading signal, a response signal (ni i=1,...k) from which said identification data (ID) of said tag ($6_r$ r=1,...p) are detectable;

   said walking comprising a plurality of gait cycles (4), each gait cycle (4) comprising a swing phase (41) followed by a stance phase (42);
   said system being **characterized by** comprising:

   - a radiofrequency communication device (10), equipped with an antenna (11), at least said antenna (11) being associable to at least one lower limb (3) of said subject (2), said communication device (10) being configured to send a sequence of said reading signals and to detect a sequence of said response signals ($n_i$ i=1,...k) sent by one or more tags ($6_r$ r=1,...p) of said series of tags ($6_r$ r=1,...p), said communication device (10) being configured to associate to each detected response signal ($n_i$ i=1,...k) a reception time ($T_i$ i=1,...k), and to determine, from said response signal ($n_i$ i=1,...k), a phase value (Ph) and a power value (RSSI) of the response signal ($n_i$ i=1,...k);
   - a data processing module (15) operatively connected to said radiofrequency communication device (10) and configured to analyze the response signals ($n_i$ i=1,...k) received from the communication device (10) as a function of said reception time ($T_i$ i=1,...k) and configured so as to process phase values (Ph) on the basis of said power values (RSSI) in order to identify, among said response signals ($n_i$ i=1,...k), two or more actual swing signals ($M_{in}$, $M_{fin}$) that belong to a same swing phase (41) of a gait cycle (4), said data processing module (15) being configured so as to determine characteristic parameters of said plurality of gait cycles (4) based on characteristic parameters of said one or more actual swing signals ($M_{in}$, $M_{fin}$), namely the phase value (Ph) and the power value (RSSI).

2. System, according to claim 1, **characterised in that** said data processing module (15) comprises:

   - a filtering unit (16) operatively connected to said communication device (10) and configured so as to generate for each tag ($6_r$ r=1,...p) a tag grouping ($Tg_r$ r=1,...p), comprising response signals ($n_i$ i=1,...k) sent from a same tag ($6_r$ r=1,..p);
   - a processing unit (17) operatively connected to said filtering unit (16) and configured so as to analyze separately each tag grouping ($Tg_r$ r=1,...p) to detect one or more anomalous signals, said anomalous signals having a discontinuous phase value (Ph) with respect to the phase value (Ph) of said response signals ($n_i$ i=1,...k) received in succession.

3. System, according to claim 2, **characterised in that** said processing module (17) is configured so as to identify said one or more anomalous signals on the basis of:

   - a first phase comparison, which involves defining in a recursive manner, and for each tag grouping ($Tg_r$ r=1,...p), a phase difference value between two response signals ($n_i$ i=1,...k) received in succession, and providing a second power comparison if said phase difference value exceeds a predetermined first threshold value (V1).

4. System, according to claim 3, **characterised in that** said second power comparison provides for determining a power difference value between a response signal (n) and the successive response signal (n+1) and for performing a phase correction on the response signal (n) if said power difference value is lower than a second predetermined threshold value (V2), said response signal (n) defining said anomalous signal.

5. System, according to claim 4, **characterized in that** said processing unit (17) is configured so as to provide said phase correction by adding a predefined value (Vc) to the phase value (Ph) of said anomalous signal.

6. System, according to claim 2, **characterized in that** said processing unit (17) is configured so as to identify at least a series of swing signals ($m_h$ h=1...,q) in

each tag grouping ($Tg_r$ r=1,...p), the processing unit (17) providing for comparing, recursively, said phase value (Ph) of each response signal with a grouping average value ($VM_r$ r=1,...p) so as to determine for each set of swing signals ($m_h$ h=1...,q) a theoretical initial swing signal ($m_{in}$) and a theoretical final swing signal ($m_{fin}$) on the basis of said reception time ($T_i$ i=1,...k).

7. System, according to claim 6, **characterised in that** said processing unit (17) is configured so as to generate an ordered series comprising said theoretical initial swing signals ($m_{in}$) and said theoretical final swing signals ($m_{fin}$), ordered with respect to said reception time ($T_i$ i=1,...k) and ordered independently from the tag groupings ($Tg_r$ r=1,...p),
said processing unit (17) being also configured so as to determine a reception interval between said successive theoretical initial swing signals ($m_{in}$), and to identify as actual initial swing signals ($M_{in}$) said theoretical initial swing signals ($m_{in}$) which have, with respect to the successive theoretical initial swing signal ($m_{in}$), said actual reception interval greater than a predefined time-based threshold or "Next Step" value, and to identify as actual final swing signals ($M_{fin}$) said theoretical final swing signals ($m_{fin}$) interposed between successive actual initial swing signals ($M_{in}$).

8. System, according to claim 7, **characterised in that** said processing unit (17) is able to determine for each actual gait cycle (4), on the basis of said actual initial swing signals ($M_{in}$) and of said actual final swing signals ($M_{fin}$):

   - a time duration that is computed as the difference between said reception time ($T_i$ i=1,...k) of two successive actual initial swing signals ($M_{in}$); and
   to determine said characteristic parameters: an initial time ($T_{in}$) and an end time ($T_{fin}$) for each swing phase, an actual swing phase, a relative percentage of said swing phase (41) with respect to said stance phase (42) with respect to said actual gait cycle (4), a distance travelled within each gait cycle on the basis of said actual initial swing signals ($M_{in}$) and said actual final swing signals ($M_{fin}$).

9. Method for the detection and analysis of the walking of a subject (2) along a path (5), said walking comprising a plurality of gait cycles (4) and each gait cycle comprising a swing phase (41) followed by a stance phase (42);
the method being **characterized by** comprising:

   - associating a series of tags ($6_r$ r=1,...p) to define said path (5), each tag ($6_r$ r=1,...p) of said series being remotely automatically identifiable and configured to receive a reading signal and to provide, in response to said reading signal, a response signal ($n_i$ i=1,...k) from which identification data (ID) of said tag ($6_r$ r=1,...p) are detected;
   - associating to at least one lower limb (3) of said subject (2) at least one antenna (11) of a radiofrequency communication device (10) which is configured to send a sequence of said reading signals and to detect a sequence of said response signals ($n_i$ i=1,...k) sent by one or more tags of said series of tags ($6_r$ r=1,...p);
   - associating to each detected response signal ($n_i$ i=1,...k) a reception time ($T_i$ i=1,...k), and determining from said response signal ($n_i$ i=1,...k) a phase value (Ph) and a power value (RSSI) of the response signal ($n_i$ i=1,...k);
   - analyzing said response signals ($n_i$ i=1,...k) received as a function of said reception time ($T_i$ i=1,...k), and
   - processing said phase values (Ph) on the basis of said power values (RSSI) in order to identify, among said response signals ($n_i$ i=1,...k), two or more actual swing signals ($M_{in}$, $M_{fin}$) that belong to the same swing phase (41) of a gait cycle (4), and
   - determining characteristic parameters of said plurality of gait cycles (4) on the basis of characteristic parameters of said one or more actual swing signals ($M_{in}$, $M_{fin}$), namely the phase value (Ph) and the power value (RSSI).

10. Method, according to claim 9, **characterized by**:

    - dividing the received response signals ($n_i$ i=1,...k) on the basis of said identification data (ID) generating for each tag ($6_r$ r=1,...p) a tag grouping ($Tg_r$ r=1,...p), and
    - analyzing separately each tag grouping ($Tg_r$ r=1,...p) in order to detect one or more anomalous signals, said anomalous signals having a phase value (Ph) that is discontinuous with respect to the phase value (Ph) of said response signals ($n_i$ i=1,...k) received in succession.

11. Method, according to claim 10, **characterized in that** separately analyzing each tag grouping ($Tg_r$ r=1,...p) to detect one or more anomalous signals comprises:

    - a first phase comparison comprising:

      defining in a recursive manner a phase difference value between two successive response signals ($n_i$ i=1,...k) ; and
      providing a second power comparison if said phase difference value exceeds a first predetermined threshold value (V1);

- said second power comparison comprising:

determining a power difference value by comparing said power values (RSSI) of two successive response signals (n, n+1), and defining the response signal (n) as anomalous signal if said power difference value is lower than a second predetermined threshold value (V2).

12. Method, according to claim 11, **characterized by** further providing for a phase correction by adding a predefined value (VC) to the phase value (Ph) of each identified anomalous signal.

13. Method, according to claim 11, **characterized by**:

- identifying at least a series of swing signals ($m_h$ h=1...,q) in each tag grouping ($Tg_r$ r=1,...p) by comparing, recursively, each phase value (Ph) with a predefined average value ($VM_r$ r=1,...p); and

- identifying for each identified series of swing signals ($m_h$ h=1...,q) a theoretical initial swing signal ($m_{in}$) and a theoretical final swing signal ($m_{fin}$) determined on the basis of said reception time ($T_i$ i=1,...k);

- generating, independently from the tag groupings ($Tg_r$ r=1,...p), an ordered series of signals with said theoretical initial swing signals ($m_{in}$) and said theoretical final swing signals ($m_{fin}$) and identifying as actual initial swing signals (Min) said theoretical initial swing signals ($m_{in}$) which have, with respect to the successive theoretical initial swing signal ($m_{in}$), an actual reception interval greater than a predefined time-based threshold or "Next Step" value;

- defining at least one time duration of gait cycle as the difference between said reception times ($T_i$ i=1,...k) of two successive actual initial swing signals ($M_{in}$) and defining as actual final swing signals ($M_{fin}$) said theoretical final swing signals ($m_{fin}$) interposed between said successive initial swing signals ($M_{in}$);

- determining said characteristic parameters of said gait cycle (4) on the basis of the parameters associated to said actual initial swing signals ($M_{in}$) and said actual final swing signals ($M_{fin}$).

**Patentansprüche**

1. System (1) für die Erfassung und die Analyse des Gehens eines Subjekts (2) entlang eines Wegs (5), wobei der Weg (5) durch eine Reihe von Tags ($6_r$ r=1,...p), die in einer Sequenz assoziiert und automatisch entfernt identifizierbar ist, definiert ist, jedes Tag ($6_r$ r=1,...p) umfassend:

- ein Speicherelement, das Identifikationsdaten (ID) des Tags ($6_r$ r=1,...p) ablegt und
- einen Empfänger/Transmitter, der konfiguriert ist, um ein Lesesignal zu empfangen und, als Reaktion auf das Lesesignal, ein Antwortsignal ($n_i$ i=1,...k), von dem die Identifikationsdaten (ID) des Tags ($6_r$ r=1,...p) erfassbar sind, bereitzustellen;

das Gehen umfassend eine Vielzahl von Gangzyklen (4), jeder Gangzyklus (4) umfassend eine Schwungphase (41), gefolgt durch eine Standphase (42); wobei das System **dadurch gekennzeichnet ist, dass** es umfasst:

- eine Hochfrequenzkommunikationsvorrichtung (10), die mit einer Antenne (11) ausgestattet ist, wobei mindestens die Antenne (11) mit mindestens einem unteren Glied (3) des Subjekts (2) assoziierbar ist, wobei die Kommunikationsvorrichtung (10) konfiguriert ist, um eine Sequenz der Lesesignale zu senden und um eine Sequenz der Antwortsignale ($n_i$ i=1,...k), die durch ein oder mehrere Tags ($6_r$ r=1,...p) der Reihe von Tags ($6_r$ r=1,...p) gesendet wird, zu erfassen, wobei die Kommunikationsvorrichtung (10) konfiguriert ist, um mit jedem erfassten Antwortsignal ($n_i$ i=1,...k) eine Empfangszeit ($T_i$ i=1,...k) zu assoziieren, und um, von dem Antwortsignal ($n_i$ i=1,...k), einen Phasenwert (Ph) und einen Leistungswert (RSSI) des Antwortsignals ($n_i$ i=1,...k) zu bestimmen;
- ein Datenverarbeitungsmodul (15), das mit der Hochfrequenzkommunikationsvorrichtung (10) wirkverbunden und konfiguriert ist, um die Antwortsignale ($n_i$ i= 1,...k), die von der Kommunikationsvorrichtung (10) empfangen werden, in Abhängigkeit von der Empfangszeit ($T_i$ i=1,...k) zu analysieren und konfiguriert ist, um Phasenwerte (Ph) auf der Basis der Leistungswerte (RSSI) zu verarbeiten, um, unter den Antwortsignalen ($n_i$ i= 1,...k), zwei oder mehr tatsächliche Schwungsignale ($M_{An}$, $M_{End}$), die zu einer gleichen Schwungphase (41) eines Gangzyklus (4) gehören, zu identifizieren, wobei das Datenverarbeitungsmodul (15) konfiguriert ist, um charakteristische Parameter der Vielzahl von Gangzyklen (4) basierend auf charakteristischen Parametern des einen oder der mehreren tatsächlichen Schwungsignale ($M_{An}$, $M_{End}$), nämlich den Phasenwert (Ph) und den Leistungswert (RSSI), zu bestimmen.

2. System nach Anspruch 1, **dadurch gekennzeichnet, dass** das Datenverarbeitungsmodul (15) umfasst:

    - eine Filtereinheit (16), die mit der Kommunikationsvorrichtung (10) wirkverbunden und konfiguriert ist, um für jedes Tag ($6_r$ r=1,...p) eine Tag-Gruppierung ($Tg_r$ r=1,...p) zu erzeugen, umfassend Antwortsignale ($n_i$ i=1,...k), die von einem gleichen Tag ($6_r$ r=1,...p) gesendet werden;
    - eine Verarbeitungseinheit (17), die mit der Filtereinheit (16) wirkverbunden und konfiguriert ist, um jede Tag-Gruppierung ($Tg_r$ r=1,...p) separat zu analysieren, um ein oder mehrere anomale Signale zu erfassen, wobei die anomalen Signale einen diskontinuierlichen Phasenwert (Ph) hinsichtlich des Phasenwerts (Ph) der Antwortsignale ($n_i$ i=1,...k), die nacheinander empfangen werden, aufweisen.

3. System nach Anspruch 2, **dadurch gekennzeichnet, dass** das Verarbeitungsmodul (17) konfiguriert ist, um das eine oder die mehreren anomalen Signale auf der Basis zu identifizieren von:

    - einem ersten Phasenvergleich, der ein Definieren in einer rekursiven Weise, und für jede Tag-Gruppierung ($Tg_r$ r=1,...p), eines Phasendifferenzwerts zwischen zwei Antwortsignalen ($n_i$ i=1,...k), die nacheinander empfangen werden, und ein Bereitstellen eines zweiten Leistungsvergleichs, falls der Phasendifferenzwert einen vorbestimmten ersten Schwellenwert (V1) überschreitet, beinhaltet.

4. System nach Anspruch 3, **dadurch gekennzeichnet, dass** der zweite Leistungsvergleich zum Bestimmen eines Leistungsdifferenzwerts zwischen einem Antwortsignal (n) und dem nacheinander folgenden Antwortsignal (n+1) und zum Durchführen einer Phasenkorrektur an dem Antwortsignal (n), falls der Leistungsdifferenzwert niedriger als ein zweiter vorbestimmter Schwellenwert (V2) ist, das Antwortsignal (n), das das anomale Signal definiert, bereitstellt.

5. System nach Anspruch 4, **dadurch gekennzeichnet, dass** die Verarbeitungseinheit (17) konfiguriert ist, um die Phasenkorrektur durch Hinzufügen eines vordefinierten Werts (Vc) zu dem Phasenwert (Ph) des anomalen Signals bereitzustellen.

6. System nach Anspruch 2, **dadurch gekennzeichnet, dass** die Verarbeitungseinheit (17) konfiguriert ist, um mindestens eine Reihe von Schwungsignalen ($m_h$ h=1 ...,q) in jeder Tag-Gruppierung ($Tg_r$ r=1,...p), zu identifizieren, wobei die Verarbeitungseinheit (17) zum Vergleichen, rekursiv, den Phasenwert (Ph) jedes Antwortsignals mit einem Gruppierungsdurchschnittswert ($VM_r$ r=1,...p) bereitstellt, um für jeden Satz von Schwungsignalen ($m_h$ h=1 ...,q) ein theoretisches Anfangsschwungsignal ($m_{An}$) und ein theoretisches Endschwungsignal ($m_{End}$) auf der Basis der Empfangszeit ($T_i$ i=1,...k) zu bestimmen.

7. System nach Anspruch 6, **dadurch gekennzeichnet, dass** die Verarbeitungseinheit (17) konfiguriert ist, um eine geordnete Reihe, umfassend die theoretischen Anfangsschwungsignale ($m_{An}$) und die theoretischen Endschwungsignale ($m_{End}$), die hinsichtlich der Empfangszeit ($T_i$ i=1,...k) geordnet und von den Tag-Gruppierungen ($Tg_r$ r=1,...p) unabhängig geordnet sind, zu erzeugen, wobei die Verarbeitungseinheit (17) ebenso konfiguriert ist, um ein Empfangsintervall zwischen den nacheinander folgenden theoretischen Anfangsschwungsignalen ($m_{An}$) zu bestimmen, und um als tatsächliche Anfangsschwungsignale ($M_{An}$) die theoretischen Anfangsschwingsignale ($m_{An}$), zu identifizieren, die, hinsichtlich des nacheinander folgenden theoretischen Anfangsschwungsignals ($m_{An}$), das tatsächliche Empfangsintervall aufweisen, das größer als eine vordefinierte zeitbasierte Schwelle oder ein "Nächster Schritt"-Wert ist, und um als tatsächliche Endschwungsignale ($M_{End}$) die theoretischen Endschwungsignale ($m_{End}$), die zwischen nacheinander folgenden tatsächlichen Anfangsschwungsignalen ($M_{An}$) eingeschoben sind, zu identifizieren.

8. System nach Anspruch 7, **dadurch gekennzeichnet, dass** die Verarbeitungseinheit (17) in der Lage ist, für jeden tatsächlichen Gangzyklus (4) auf der Basis der tatsächlichen Anfangsschwungsignale ($M_{An}$) und der tatsächlichen Endschwungsignale ($M_{End}$) zu bestimmen:

    - eine Zeitdauer, die als die Differenz zwischen der Empfangszeit ($T_i$ i=1,...k) von zwei nacheinander folgenden tatsächlichen Anfangsschwungsignalen ($M_{An}$) berechnet wird; und um die charakteristischen Parameter zu bestimmen: eine Anfangszeit ($T_{An}$) und eine Endzeit ($T_{End}$) für jede Schwungphase, eine tatsächliche Schwungphase, einen relativen Prozentsatz der Schwungphase (41) hinsichtlich der Standphase (42) hinsichtlich des tatsächlichen Gangzyklus (4), eine Distanz, die innerhalb jedes Gangzyklus auf der Basis der tatsächlichen Anfangsschwungsignale ($M_{An}$) und der tatsächlichen Endschwungsignale ($M_{End}$) zurückgelegt wird.

9. Verfahren für die Erfassung und Analyse des Gehens eines Subjekts (2) entlang eines Wegs (5), das Gehen umfassend eine Vielzahl von Gangzyklen (4) und jeder Gangzyklus umfassend eine Schwungphase (41), gefolgt durch eine Standphase (42); wobei das Verfahren **dadurch gekennzeichnet ist, dass** es umfasst:

- Assoziieren einer Reihe von Tags ($6_r$ r=1,...p), um den Weg (5) zu definieren, wobei jedes Tag ($6_r$ r=1,...p) der Reihe entfernt automatisch identifizierbar und konfiguriert ist, um ein Lesesignal zu empfangen und, als Reaktion auf das Lesesignal, ein Antwortsignal ($n_i$ i=1,...k), von dem die Identifikationsdaten (ID) des Tags ($6_r$ r=1,...p) erfasst werden, bereitzustellen;
- Assoziieren, mit mindestens einem unteren Glied (3) des Subjekts (2), mindestens einer Antenne (11) einer Hochfrequenzkommunikationsvorrichtung (10), die konfiguriert ist, um eine Sequenz der Lesesignale zu senden und eine Sequenz der Antwortsignale ($n_i$ i=1,...k), die durch ein oder mehrere Tags der Reihe von Tags ($6_r$ r=1,...p) gesendet wird, zu erfassen;
- Assoziieren, mit jedem erfassten Antwortsignal ($n_i$= 1,...k), einer Empfangszeit ($T_i$ i=1,...k) und Bestimmen, von dem Antwortsignal ($n_i$ i=1,...k), eines Phasenwerts (Ph) und eines Leistungswerts (RSSI) des Antwortsignals ($n_i$ i=1,...k);
- Analysieren der Antwortsignale ($n_i$ i=1,...k), die in Abhängigkeit von der Empfangszeit ($T_i$ i=1,...k) empfangen werden und
- Verarbeiten der Phasenwerte (Ph) auf der Basis der Leistungswerte (RSSI), um, unter den Antwortsignalen ($n_i$ i=1,...k), zwei oder mehr tatsächliche Schwungsignale ($M_{An}$, $M_{End}$), die zu der gleichen Schwungphase (41) eines Gangzyklus (4) gehören, zu identifizieren und
- Bestimmen von charakteristischen Parametern der Vielzahl von Gangzyklen (4) auf der Basis der charakteristischen Parameter des einen oder der mehreren tatsächlichen Schwungsignale ($M_{An}$, $M_{End}$), nämlich den Phasenwert (Ph) und den Leistungswert (RSSI).

10. Verfahren nach Anspruch 9, **gekennzeichnet durch:**

- Teilen der empfangenen Antwortsignale ($n_i$ i=1,...k) auf der Basis der Identifikationsdaten (ID), wobei für jedes Tag ($6_r$ r=1,...p) eine Tag-Gruppierung ($Tg_r$ r=1,...p) erzeugt wird und

- separates Analysieren jeder Tag-Gruppierung ($Tg_r$ r=1,...p), um ein oder mehrere anomale Signale zu erfassen, wobei die anomalen Signale einen Phasenwert (Ph) aufweisen, der hinsichtlich des Phasenwerts (Ph) der Antwortsignale ($n_i$ i=1,...k), die nacheinander empfangen werden, diskontinuierlich ist.

11. Verfahren nach Anspruch 10, **dadurch gekennzeichnet, dass** das separate Analysieren jeder Tag-Gruppierung ($Tg_r$ r=1,...p), um ein oder mehrere anomale Signale zu erfassen, umfasst:

- einen ersten Phasenvergleich, umfassend:

Definieren, in einer rekursiven Weise, eines Phasendifferenzwerts zwischen zwei nacheinander folgenden Antwortsignalen ($n_i$ i=1,...k); und
Bereitstellen eines zweiten Leistungsvergleichs, falls der Phasendifferenzwert einen ersten vorbestimmten Schwellenwert (V1) überschreitet;

- der zweite Leistungsvergleich umfassend:

Bestimmen eines Leistungsdifferenzwerts durch Vergleichen der Leistungswerte (RSSI) von zwei nacheinander folgenden Antwortsignalen (n, n+1) und
Definieren des Antwortsignals (n) als anomales Signal, falls der Leistungsdifferenzwert niedriger als ein zweiter vorbestimmter Schwellenwert (V2) ist.

12. Verfahren nach Anspruch 11, **gekennzeichnet durch** ferner das Bereitstellen einer Phasenkorrektur durch Hinzufügen eines vordefinierten Werts (VC) zu dem Phasenwert (Ph) jedes identifizierten anomalen Signals.

13. Verfahren nach Anspruch 11, **gekennzeichnet durch:**

- Identifizieren mindestens einer Reihe von Schwungsignalen ($m_h$ h=1...,q) in jeder Tag-Gruppierung ($Tg_r$ r=1,...p) durch Vergleichen, rekursiv, jedes Phasenwerts (Ph) mit einem vordefinierten Durchschnittswert ($VM_r$ r=1,...p); und
- Identifizieren, für jede identifizierte Reihe von Schwungsignalen ($m_h$ h=1...,q), eines theoretischen Anfangsschwungsignals ($m_{An}$) und eines theoretischen Endschwungsignals ($m_{End}$) auf der Basis der Empfangszeit ($T_i$ i=1,...k);
- Erzeugen, unabhängig von den Tag-Gruppierungen ($Tg_r$ r=1,...p), einer geordneten Reihe von Signalen mit den theoretischen Anfangsschwungsignalen ($m_{An}$) und den theoretischen Endschwungsignalen ($m_{End}$) und Identifizieren, als tatsächliche Anfangsschwungsignale (MAn), der theoretischen Anfangsschwungsignale ($m_{An}$), die, hinsichtlich der nacheinander folgenden theoretischen Anfangsschwungsignale ($m_{An}$), ein tatsächliches Empfangsintervall, das größer als eine vordefinierte zeitbasierte Schwelle oder der "Nächster Schritt"-Wert ist, aufweisen;

- Definieren mindestens einer Zeitdauer des Gangzyklus als die Differenz zwischen den Empfangszeiten ($T_i$ i=1,...k) von zwei nacheinander folgenden tatsächlichen Anfangsschwungsignalen ($M_{An}$) und Definieren, als tatsächliche Endschwungsignale ($M_{End}$), der theoretischen Endschwungsignale ($m_{End}$), die zwischen den nacheinander folgenden Anfangsschwungsignalen ($M_{An}$) eingeschoben sind;

- Bestimmen der charakteristischen Parameter des Gangzyklus (4) auf der Basis der Parameter, die mit den tatsächlichen Anfangsschwungsignalen ($M_{An}$) und den tatsächlichen Endschwungsignale ($M_{End}$) assoziiert sind.

**Revendications**

1. Système (1) pour la détection et l'analyse de la marche d'un sujet (2) le long d'un trajet (5), ledit trajet (5) étant défini par une série d'étiquettes ($6_r$ r=1,...p) associées dans une séquence et automatiquement identifiables à distance, chaque étiquette ($6_r$ r=1,...p) comprenant :

    - un élément de mémoire stockant des données d'identification (ID) de ladite étiquette ($6_r$ r=1,...p) et
    - un récepteur/émetteur configuré pour recevoir un signal de lecture et pour fournir, en guise de réponse audit signal de lecture, un signal de réponse (ni i=1,...k) à partir duquel lesdites données d'identification (ID) de ladite étiquette ($6_r$ r=1,...p) sont détectables ;

    ladite marche comprenant une pluralité de cycles de démarche (4), chaque cycle de démarche (4) comprenant une phase d'oscillation (41) suivie par une phase d'appui (42) ;
    ledit système étant **caractérisé en ce qu'**il comprend :

        - un dispositif de communication par radiofréquence (10), équipé d'une antenne (11), au moins ladite antenne (11) pouvant être associée à au moins un membre inférieur (3) dudit sujet (2), ledit dispositif de communication (10) étant configuré pour envoyer une séquence desdits signaux de lecture et pour détecter une séquence desdits signaux de réponse ($n_i$ i=1,...k) envoyés par une ou plusieurs étiquettes ($6_r$ r=1,...p) de ladite série d'étiquettes ($6_r$ r=1,...p), ledit dispositif de communication (10) étant configuré pour associer à chaque signal de réponse détecté ($n_i$ i=1,...k) un moment de réception ($T_i$ i=1,...k), et pour déterminer, à partir dudit signal de réponse ($n_i$ i=1,...k), une valeur de phase (Ph) et une valeur de puissance (RSSI) du signal de réponse ($n_i$ i=1,...k) ;

- un module de traitement de données (15) fonctionnellement connecté audit dispositif de communication par radiofréquence (10) et configuré pour analyser les signaux de réponse ($n_i$ i=1,...k) reçus du dispositif de communication (10) en fonction dudit moment de réception ($T_i$ i=1,...k) et configuré de façon à traiter les valeurs de phase (Ph) en fonction desdites valeurs de puissance (RSSI) afin d'identifier, parmi lesdits signaux de réponse ($n_i$ i=1,...k), deux signaux d'oscillation réels ou plus ($M_{in}$, $M_{fin}$) qui appartiennent à une même phase d'oscillation (41) d'un cycle de démarche (4), ledit module de traitement de données (15) étant configuré de façon à déterminer des paramètres caractéristiques de ladite pluralité de cycles de démarche (4) en fonction de paramètres caractéristiques dudit ou desdits signaux d'oscillation réels ($M_{in}$, $M_{fin}$), à savoir la valeur de phase (Ph) et la valeur de puissance (RSSI).

2. Système, selon la revendication 1, **caractérisé en ce que** ledit module de traitement de données (15) comprend :

    - une unité de filtrage (16) fonctionnellement connectée audit dispositif de communication (10) et configurée de façon à générer pour chaque étiquette ($6_r$ r=1,...p) un groupement d'étiquettes ($Tg_r$ r=1,...p), comprenant des signaux de réponse (ni i=1,...k) envoyés à partir d'une même étiquette ($6_r$ r=1,..p) ;
    - une unité de traitement (17) fonctionnellement connectée à ladite unité de filtrage (16) et configurée de façon à analyser séparément chaque groupement d'étiquettes ($Tg_r$ r=1,...p) pour détecter un ou plusieurs signaux anormaux, lesdits signaux anormaux ayant une valeur de phase discontinue (Ph) par rapport à la valeur de phase (Ph) desdits signaux de réponse ($n_i$ i=1,...k) reçus successivement.

3. Système, selon la revendication 2, **caractérisé en ce que** ledit module de traitement (17) est configuré de façon à identifier ledit ou lesdits signaux anormaux en fonction de :

- une première comparaison de phase, qui implique de définir de manière récursive, et pour chaque groupement d'étiquettes ($Tg_r$ r=1,...p), une valeur de différence de phase entre deux signaux de réponse ($n_i$ i=1,...k) reçus successivement, et de fournir une seconde comparaison de puissance si ladite valeur de différence de phase dépasse une première valeur seuil prédéterminée (V1).

4. Système, selon la revendication 3, **caractérisé en ce que** ladite seconde comparaison de puissance permet de déterminer une valeur de différence de puissance entre un signal de réponse (n) et le signal de réponse successif (n+1) et de mettre en oeuvre une correction de phase sur le signal de réponse (n) si ladite valeur de différence de puissance est inférieure à une seconde valeur seuil prédéterminée (V2), ledit signal de réponse (n) définissant ledit signal anormal.

5. Système, selon la revendication 4, **caractérisé en ce que** ladite unité de traitement (17) est configurée de façon à fournir ladite correction de phase en ajoutant une valeur prédéfinie (Vc) à la valeur de phase (Ph) dudit signal anormal.

6. Système, selon la revendication 2, **caractérisé en ce que** ladite unité de traitement (17) est configurée de façon à identifier au moins une série de signaux d'oscillation ($m_h$ h=1...,q) dans chaque groupement d'étiquettes ($Tg_r$ r=1...,p), l'unité de traitement (17) permettant de comparer, récursivement, ladite valeur de phase (Ph) de chaque signal de réponse à une valeur moyenne de groupement ($VM_r$ r=1,...p) de façon à déterminer pour chaque ensemble de signaux d'oscillation ($m_h$ h=1...,q) un signal d'oscillation initial théorique ($m_{in}$) et un signal d'oscillation final théorique ($m_{fin}$) en fonction dudit moment de réception ($T_i$ i=1,.. .k).

7. Système, selon la revendication 6, **caractérisé en ce que** ladite unité de traitement (17) est configurée de façon à générer une série classée comprenant lesdits signaux d'oscillation initiaux théoriques ($m_{in}$) et lesdits signaux d'oscillation finaux théoriques ($m_{fin}$), classés par rapport audit moment de réception ($T_i$ i=1,...k) et classés indépendamment des groupements d'étiquettes ($Tg_r$ r=1,...p),

ladite unité de traitement (17) étant également configurée de façon à déterminer un intervalle de réception entre lesdits signaux d'oscillation initiaux théoriques successifs ($m_{in}$), et à identifier en guise de signaux d'oscillation initiaux réels ($M_{in}$) lesdits signaux d'oscillation initiaux théoriques ($m_{in}$) qui ont, par rapport au signal d'oscillation initial théorique successif ($m_{in}$), ledit intervalle de réception réel supérieur à un seuil temporel ou valeur d'« étape suivante » prédéfini, et à identifier en guise de signaux d'oscillation finaux réels ($M_{fin}$) lesdits signaux d'oscillation finaux théoriques ($m_{fin}$) intercalés entre des signaux d'oscillation initiaux réels successifs ($M_{in}$).

8. Système, selon la revendication 7, **caractérisé en ce que** ladite unité de traitement (17) est capable de déterminer pour chaque cycle de démarche réel (4), en fonction desdits signaux d'oscillation initiaux réels ($M_{in}$) et desdits signaux d'oscillation finaux réels ($M_{fin}$) :

- une durée de temps qui est calculée en tant que différence entre ledit moment de réception ($T_i$ i=1,...k) de deux signaux d'oscillation initiaux réels successifs ($M_{in}$) ; et
de déterminer lesdits paramètres caractéristiques : un moment initial ($T_{in}$) et un moment de fin ($T_{fin}$) pour chaque phase d'oscillation, une phase d'oscillation réelle, un pourcentage relatif de ladite phase d'oscillation (41) par rapport à ladite phase d'appui (42) par rapport audit cycle de démarche réel (4), une distance parcourue au cours de chaque cycle de démarche en fonction desdits signaux d'oscillation initiaux réels ($M_{in}$) et desdits signaux d'oscillation finaux réels ($M_{fin}$).

9. Procédé pour la détection et l'analyse de la marche d'un sujet (2) le long d'un trajet (5), ladite marche comprenant une pluralité de cycles de démarche (4) et chaque cycle de démarche comprenant une phase d'oscillation (41) suivie par une phase d'appui (42) ;
le procédé étant **caractérisé en ce qu'**il comprend :

- l'association d'une série d'étiquettes ($6_r$ r=1,...p) pour définir ledit trajet (5), chaque étiquette ($6_r$ r=1,...p) de ladite série étant automatiquement identifiable à distance et configurée pour recevoir un signal de lecture et pour fournir, en réponse audit signal de lecture, un signal de réponse ($n_i$ i=1,...k) à partir duquel des données d'identification (ID) de ladite étiquette ($6_r$ r=1,...p) sont détectées ;
- l'association à au moins un membre inférieur (3) dudit sujet (2) d'au moins une antenne (11) d'un dispositif de communication par radiofréquence (10) qui est configuré pour envoyer un séquence desdits signaux de lecture et pour détecter une séquence desdits signaux de réponse (ni i=1,...k) envoyés par une ou plusieurs étiquettes de ladite série d'étiquettes ($6_r$ r=1,...p) ;
- l'association à chaque signal de réponse détecté (n_i i=1,...k) d'un moment de réception ($T_i$ i=1,...k), et la détermination à partir dudit signal de réponse (ni i=1,...k) d'une valeur de phase (Ph) et d'une valeur de puissance (RSSI) du signal de réponse (ni i=1,...k) ;
- l'analyse desdits signaux de réponse (ni i=1,...k) reçus en fonction dudit moment de réception ($T_i$ i=1,...k), et
- le traitement desdites valeurs de phase (Ph) en fonction desdites valeurs de puissance (RSSI) afin d'identifier, parmi lesdits signaux de réponse (ni i=1,...k), deux signaux d'oscillation réels ou plus ($M_{in}$, $M_{fin}$) qui appartiennent à la même phase d'oscillation (41) d'un cycle de démarche (4), et
- la détermination de paramètres caractéristiques de ladite pluralité de cycles de démarche (4) en fonction des paramètres caractéristiques dudit ou desdits signaux d'oscillation réels ($M_{in}$, $M_{fin}$), à savoir la valeur de phase (Ph) et la valeur de puissance (RSSI).

10. Procédé, selon la revendication 9, **caractérisé par** :

   - la division des signaux de réponse reçus (ni i=1,...k) en fonction desdites données d'identification (ID) en générant pour chaque étiquette ($6_r$ r=1,...p) un groupement d'étiquettes ($Tg_r$ r=1,...p), et
   - l'analyse séparée de chaque groupement d'étiquettes ($Tg_r$ r=1,...p) afin de détecter un ou plusieurs signaux anormaux, lesdits signaux anormaux ayant une valeur de phase (Ph) qui est discontinue par rapport à la valeur de phase (Ph) desdits signaux de réponse (ni i=1,...k) reçus successivement.

11. Procédé, selon la revendication 10, **caractérisé en ce que** l'analyse séparée de chaque groupement d'étiquettes ($Tg_r$ r=1,...p) pour détecter un ou plusieurs signaux anormaux comprend :

   - une première comparaison de phase comprenant :

      la définition d'une manière récursive d'une valeur de différence de phase entre deux signaux de réponse successifs (ni i=1,...k) ; et
      la fourniture d'une seconde comparaison de puissance si ladite valeur de différence de phase dépasse une première valeur seuil prédéterminée (V1) ;

   - ladite seconde comparaison de puissance comprenant :

      la détermination d'une valeur de différence de puissance en comparant lesdites valeurs de puissance (RSSI) de deux signaux de réponse successifs (n, n+1), et
      la définition du signal de réponse (n) en tant que signal anormal si ladite valeur de différence de puissance est inférieure à une seconde valeur seuil prédéterminée (V2).

12. Procédé, selon la revendication 11, **caractérisé par** la fourniture en outre d'une correction de phase en ajoutant une valeur prédéfinie (VC) à la valeur de phase (Ph) de chaque signal anormal identifié.

13. Procédé, selon la revendication 11, **caractérisé par** :

   - l'identification d'au moins une série de signaux d'oscillation ($m_h$ h=1...,q) dans chaque groupement d'étiquettes ($Tg_r$ r=1,...p) en comparant, récursivement, chaque valeur de phase (Ph) à une valeur moyenne prédéfinie ($VM_r$ r=1,...p) ; et
   - l'identification pour chaque série identifiée de signaux d'oscillation ($m_h$ h=1...,q) d'un signal d'oscillation initial théorique ($m_{in}$) et d'un signal d'oscillation final théorique ($m_{fin}$) déterminés en fonction dudit moment de réception ($T_i$ i= 1,...k) ;
   - la génération, indépendamment des groupements d'étiquettes ($Tg_r$ r=1,...p), d'une série classée de signaux avec lesdits signaux d'oscillation initiaux théoriques ($m_{in}$) et lesdits signaux d'oscillation finaux théoriques ($m_{fin}$) et l'identification en guise de signaux d'oscillation initiaux réels (Min) desdits signaux d'oscillation initiaux théoriques ($m_{in}$) qui ont, par rapport au signal d'oscillation initial théorique successif ($m_{in}$), un intervalle de réception réel supérieur à un seuil temporel ou valeur d'« étape suivante » prédéfini ;
   - la définition d'au moins une durée de temps de cycle de démarche en guise de différence entre ledit moment de réceptions ($T_i$ i=1,...k) de deux signaux d'oscillation initiaux réels successifs ($M_{in}$) et la définition en guise de signaux d'oscillation finaux réels ($M_{fin}$) desdits signaux d'oscillation finaux théoriques ($m_{fin}$) intercalés entre lesdits signaux d'oscillation initiaux successifs ($M_{in}$) ;
   - la détermination desdits paramètres caractéristiques dudit cycle de démarche (4) en fonction des paramètres associés auxdits signaux d'oscillation initiaux réels ($M_{in}$) et auxdits signaux

d'oscillation finaux réels ($M_{fin}$).

Fig. 1

Fig. 2

Stance phase | Swing phase | Stance phase

41 | 42

Gait cycle

4

Fig. 3

Fig. 4

Initialization of
the ID vector

16

For each ID

The
current
ID is in
the ID
vector?

NO → Add the current
ID to the ID
vector

The
current
ID was
the last
ID?

NO

From the ID vector create vectors for
phase, RSSI and time, according to the ID

Fig. 5

For each element of the vector of the corrected phase

Phase of
n-(n+1)
> 160°?

NO

(n+1) =
last?

END

V1

RSSI of
n-(n+1)
< ± 2?

V2

Correct current phase
value by 180°

Vc

Fig. 6

Compute the difference among all the elements of the phase vector

Set the average phase difference as threshold

For each element

The phase of
current
element and of
the near ones
is > than
threshold?

NO

Identify the sample as swing

Fig. 7

Compute the time difference among all the elements identified as swing

Set "Next Step" value to 95% of a maximum value among all the theoretical swing phases

Sample identified as swing? — NO →

*For each sample*

Sample n-(n+1) > Next Step value? — NO →

Identify sample n as new swing

Identify each independent swing phase

Fig. 8

Connect the gaits belonging to two or more signals of subsequent tags

Gaits? — NO →

Determine:
- Cycle duration
- Percentage of Swing/Stance
- Gait distance ($d$) or Gait length

$$d = \frac{c\varphi}{4\pi f}$$

Fig. 9

Fig. 10

Fig. 11

22

**Fig. 12**

**Fig. 13**

EP 3 623 999 B1

Fig. 14

Fig. 15

Fig. 16

Fig. 17

Fig. 18

Fig. 19